# EUROPEAN PATENT APPLICATION

(11) **EP 2 672 192 A1**
(43) Date of publication of application: **11.12.2013**
(21) Application number: 11857837.6
(22) Date of filing: 11.05.2011
(51) Int. Cl.: F24H 1/48, F24D 3/00, F24H 9/18, F24H 1/52

(54) **NITROGEN EXPANSION TANK FOR BOILER**

(30) Priority: 01.02.2011 KR 20110009872
(71) Applicant: Choi, Jin-min, Seoul 140-854 (KR); Choi, Sung-hwan, Seoul 140-050 (KR)
(72) Inventor: Choi, Jin-min, Seoul 140-854 (KR); Choi, Sung-hwan, Seoul 140-050 (KR)
(74) Representative: Spengler, Robert
(86) International application number: PCT/KR2011/003462
(87) International publication number: WO 2012/105733

(57) **Abstract**

Disclosed is a nitrogen expansion tank for a boiler. The nitrogen expansion tank for the boiler is integrally formed in a casing of the boiler to absorb the shock caused by the expansion in the volume of heated water circulating inside the casing. The nitrogen expansion tank for the boiler provided integrally with the boiler to absorb shock caused by expansion in a volume of heated water includes a nitrogen-filled tank provided in a casing having a heated-water inlet and a heated-water outlet and filled with nitrogen, and an elastic bag positioned in the nitrogen-filled tank such that heated water inflows or outflows and having a volume elastically deformed according to the inflow and the outflow of the heated water to absorb the shock caused by the expansion in the volume of the heated water.

## Description

### [Technical Field]

The present invention relates to a nitrogen expansion tank for a boiler. In more particular, the present invention relates to a nitrogen expansion tank for a boiler, which is integrally formed in a casing of the boiler to absorb the shock caused by the expansion in the volume of heated water circulating inside the casing.

### [Background Art]

A household boiler includes a compression expansion tank blocked from the atmosphere, so that the household boiler has a structure of preventing water frombeing overflowed even though a heating pipe serves as an up-pipe higher than the expansion tank.

In other words, if the boiler is actuated to increase the temperature of water in the pipe, so that the volume of the water is increased, the internal pressure of the pipe is increased, and a baffle in the expansion tank and a nitrogen-filled part absorb the internal pressure.

Therefore, an amount of dissolved oxygen in the pipe is increased due to the structure blocked from the atmosphere, thereby preventing a heat exchanger and the pipe from being corroded, and enhancing the endurance of the boiler.

However, since the household boiler according to the related art is provided separately from the compression expansion tank filled with nitrogen and the heat exchanger, the manufacturing cost of the household boiler may be increased.

### [Disclosure]

### [Technical Problem]

Accordingly, the present invention has been made keeping in mind the above problems occurring in the related art art, and an object of the present invention is to provide a nitrogen expansion tank for a boiler, which is integrally formed in a casing of the boiler to absorb the shock caused by the expansion in the volume of heated water circulating inside the casing.

### [Technical Solution]

In order to accomplish the objects, according to one aspect of the present invention, there is provided a nitrogen expansion tank for a boiler provided integrally with the boiler to absorb shock caused by expansion in a volume of heated water. The nitrogen expansion tank includes a nitrogen-filled tank provided in a casing having a heated-water inlet and a heated-water outlet and filled with nitrogen, and an elastic bag positioned in the nitrogen-filled tank such that heated water inflows or outflows and having a volume elastically deformed according to the inflow and the outflow of the heated water to absorb the shock caused by the expansion in the volume of the heated water.

In this case, preferably, the elastic bag is provided therein with an inlet for the inflow and the outflow of the heated water, the inlet of the elastic bag is provided to be open in the casing of the nitrogen-filled tank, and the nitrogen-filled tank is provided therein with a nitrogen filling port to receive nitrogen, such that the elastic bag is expanded to absorb the shock if a pressure caused by the expansion in the volume of the heated water introduced into the elastic bag is greater than a pressure of the nitrogen injected into the nitrogen-filled tank.

In addition, preferably, the elastic bag has a shape of a jar such that a portion away from the inlet has a volume larger than a volume of a portion having the inlet.

### [Advantageous Effects]

As described above, in the nitrogen expansion tank for the boiler according to the present invention, the nitrogen-filled tank and the elastic bag are integrally provided in the casing of the boiler, so that the shock caused by the expansion in the volume of the heated water circulating in the casing can be absorbed. Accordingly, when comparing with the case that the expansion tank is separately provided at the outside of the boiler, the water shock caused by the heated water can be effectively absorbed, and the whole structure of the boiler as well as the circulation structure of the heated water of the boiler can be simplified, so that the manufacturing cost of the boiler can be saved.

### [Description of Drawings]

FIG. 1 is a sectional view schematically showing a boiler employing a nitrogen expansion tank for the boiler according to one embodiment of the present invention.
FIG. 2 is a schematic view the structure of a boiler system to which a boiler employing a nitrogen expansion tank for the boiler according to one embodiment of the present invention is applied.
FIGS. 3 and 4 are views showing the structure of a boiler employing a nitrogen expansion tank for the boiler according to another embodiment of the present invention.
FIG. 5 is a sectional view schematically showing a boiler employing a nitrogen expansion tank for the boiler according to another embodiment of the present invention.
FIG. 6 is a view showing the assembling procedure of a boiler employing a nitrogen expansion tank for the boiler according to another embodiment of the present invention.

### [Best Mode]

### [Mode for Invention]

An exemplary embodiment of the present invention will be described with reference to accompanying drawings so that those skilled in the art can sufficiently understand the present invention. Those skilled in the art should understand that the embodiment of the present invention has various modifications, and the scope of the present invention is not limited to the following description.

The present embodiment is provided to more completely explain the present invention to those skilled in the art. The shape of each component shown in the drawings may be exaggerated, omitted or schematically drawn for the purpose of convenience or clarity. In addition, it should be noticed that the same reference numeral will be assigned to the same component in each drawing.

If it is determined that description about well known functions or configurations may make the subject matter of the embodiments unclear, the details thereof will be omitted.

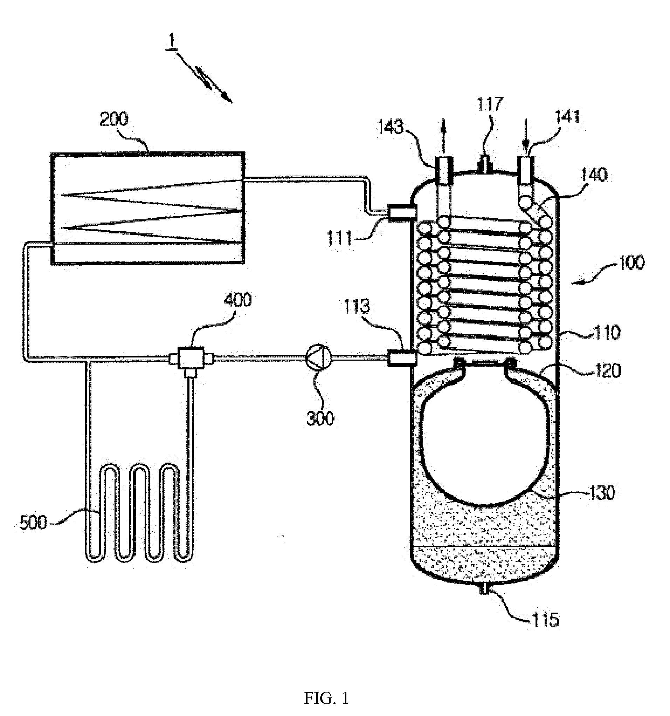

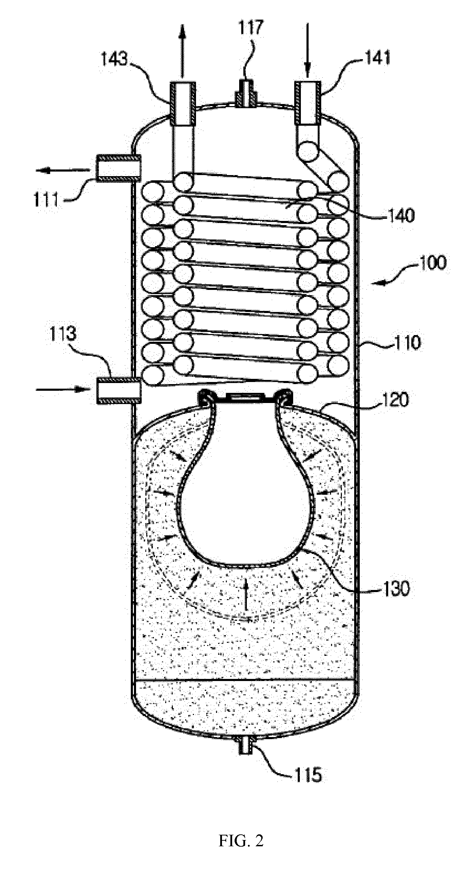

FIG. 1 is a sectional view schematically showing a boiler employing a nitrogen expansion tank for the boiler according to one embodiment of the present invention. FIG. 2 is a schematic view the structure of a boiler system to which a boiler employing a nitrogen expansion tank for the boiler according to one embodiment of the present invention is applied.

As shown in drawings, a boiler 100 includes a casing 110, a nitrogen-filled tank 120 provided under the casing 110, an elastic bag 130 provided in the nitrogen-filled tank 120 and having a volume elastically deformed according to the introduction/discharge of heated water, and a heated-water heat exchanger 140 provided above the casing 110 to adjust the temperature of the heated water.

In this case, the nitrogen expansion tank for the boiler according to one embodiment of the present invention includes the nitrogen-filled tank 120 provided under the casing 110 and the elastic bag 130 provided in the nitrogen-filled tank 120.

Meanwhile, the casing 110 has a volume to accommodate the nitrogen-filled tank 120 and the heated-water heat exchanger 140 therein and has a space allowing the heated water to circulate therein. The casing 110 includes a heated-water inlet 111 and a heated-water outlet 113 for the introduction and the discharge of the heated water. In addition, the casing 110 is provided therein with a nitrogen filling port 115 to fill nitrogen into the nitrogen-filled tank 120.

The nitrogen-filled tank 120 is provided in the casing 110 so that the volume of the elastic bag 130 is varied depending to the temperature variation of the heated water. The nitrogen-filled tank 120 includes a sealed-type compression tank, and is filled with nitrogen at the pressure of 1 bar to 2 bar.

The elastic bag 130 is provided in the nitrogen-filled tank 120. The heated-water inlet 111 of the elastic bag 130 is provided in an open state inside the casing 110 so that the heated water may be introduced or discharged. If the heated water is supplemented in the casing 110 so that the water level of the heated water is increased, the elastic bag 130 receives the heated water therein to expand. If an amount of the heated water is reduced, the shape of the elastic bag 130 is elastically contracted due to the surrounding nitrogen pressure.

The elastic bag 130 is provided in the shape of a balloon including rubber. Hereinafter, the shape of the elastic bag 130 will be described in more detail. Although shown in drawings, the elastic bag 130 has the shape of a jar in which a portion apart from the heated-water inlet has a volume larger than a volume of a portion having the heated-water inlet.

When the boiler 100 is actuatedto increase the temperature of the heated water so that the volume of the heated water is expanded, the elastic bag 130 receives the heated water by the expanded volume. On the contrary, when the temperature of the heated water is decreased so that the volume of the heated water is reduced, the expanded heated water is discharged out of the elastic bag 130. The contraction and the expansion of the elastic bag 130 are continuously repeated when the boiler 100 is actuated.

The heat exchanger 140 exchanges heat between the heated water and cooling water to increase the temperature of the cooling water introduced into the casing 110. The heat exchanger 140 is provided in the form of a spirally wound coil in order to enhance heat exchange efficiency. The cooling water is introduced through one end portion 141 of the heat exchanger 140, and hot water having the temperature, which is increased through heat exchange with the heated water, is discharged through an opposite end portion 143 of the heat exchanger 140.

In this case, since the heated water forcibly circulates around the heat exchanger 140 by a circulation pump 300, a swirl may be formed around the heat exchanger 140. Accordingly, the heat exchange efficiency between the heated water and the hot water can be maximized.

Hereinafter, the operating procedure of the boiler 100 having the above structure will be described with reference to FIGS. 1 and 2. If a boiler system 1 is actuated, the water heated by a main heat exchanger 200 is introduced through the heated-water inlet 111 of the casing 110. If the heated water is introduced into the casing 110 so that the water level is gradually heightened, the heated water may be introduced into the elastic bag 130.

If the heated water is introduced into the elastic bag 130 and the temperature of the heated water is gradually increased, the elastic bag is elastically expanded due to the expansion in the volume of the heated water as shown in FIG. 2 in the state that the elastic bag is contracted as shown in FIG. 1.

The heated water is discharged through the heated-water outlet 113 and supplied to a radiator or a place 500 to be heated through the circulation pump 300 and a 3-way valve 400.

Meanwhile, when the heated water forcibly circulates into the casing 110 by the circulation pump 300, since a uniform amount of water is stored in the heat exchanger 140, the temperature of hot water is maintained due to the heat exchange with the heated water. Accordingly, when a user opens a hot water facet, hot water can be instantly supplied to the user.

As described above, when the nitrogen expansion tank for the boiler according to the present invention is employed, the nitrogen-filled tank is integrally provided in the casing to simplify the circulation structure of the heated water of the boiler and the whole structure of the boiler, so that the manufacturing cost can be saved. Naturally, the heat exchanger is integrally provided.

In addition, a predetermined amount of water stored in the heat exchanger continuously makes contact with the heated water. Accordingly, when a user opens the hot water facet, the user can be instantly supplied with the hot water without standby time.

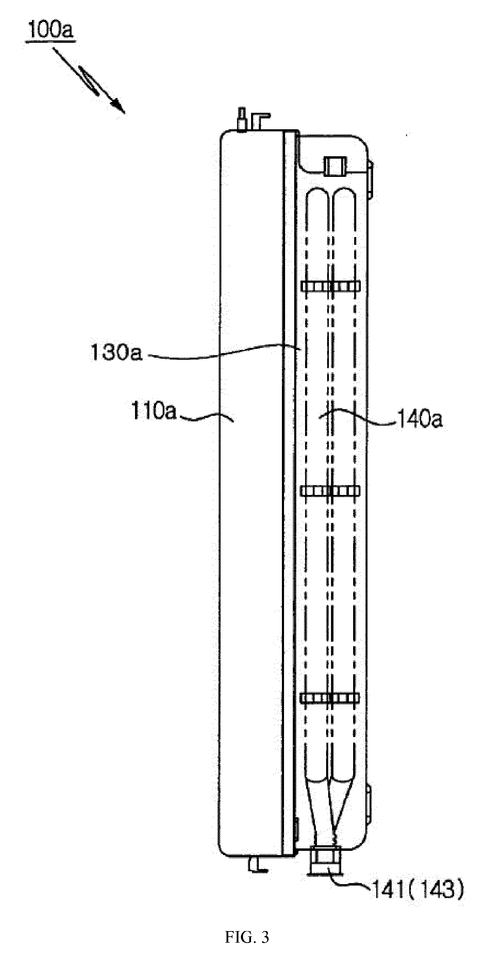

Meanwhile, FIGS. 3 to 6 are views showing the structure of a boiler 100a employing a nitrogen expansion tank for the boiler according to another embodiment of the present invention.

The boiler 100 according to the previous embodiment has a structure in which the nitrogen-filled tank 120 and the heat exchanger 140 are longitudinally arranged. Meanwhile, in the boiler 100a employing the nitrogen expansion tank for the boiler according to another embodiment of the present invention, a nitrogen-filled tank 120a and a heat exchanger 140a are transversely arranged at the left and right of a pair of casings 110a and 110b.

Accordingly, an elastic bag 130a is expanded or contracted according to an amount of heated water introduced into the casing 110a, and the heated water and the heat exchanger 140a exchange heat therebetween, so that water stored in the heat exchanger 140a is heated.

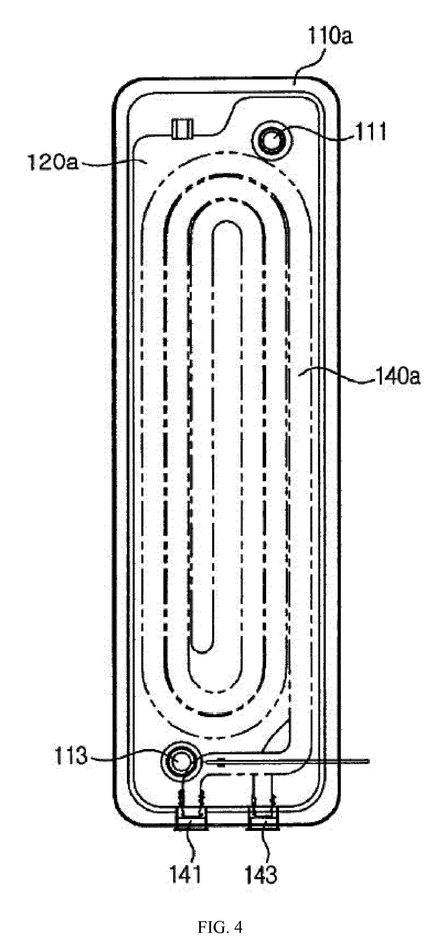

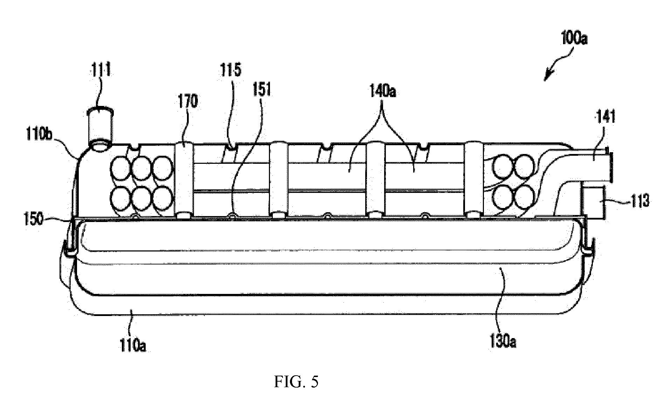

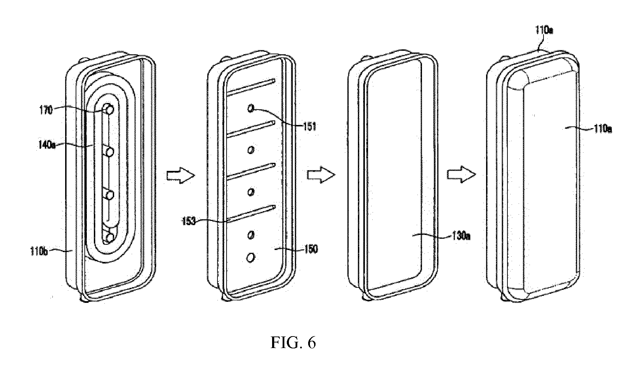

FIGS. 3 and 4 are views showing the structure of the boiler employing the nitrogen expansion tank for the boiler according to another embodiment of the present invention. FIG. 5 is a sectional view schematically showing the boiler employing the nitrogen expansion tank for the boiler according to another embodiment of the present invention. FIG. 6 is a view showing the assembling procedure of a boiler employing the nitrogen expansion tank for the boiler according to another embodiment of the present invention.

As shown in drawings, in the boiler 100a employing the nitrogen expansion tank for the boiler according to another embodiment of the present invention, the nitrogen-filled tank 120a is integrally provided in the first casing 110a, and the elastic bag 130a is provided in the nitrogen-filled tank 120a.

In addition, the second casing 110a has a space in which the heated water flows, and is provided therein with the heat exchanger 140a. The second casing 110b has an inlet 111 and an outlet 113 for the introduction and the discharge of the heated water, so that the heated water can circulate in the second casing 110b.

The heat exchanger 140a is provided in the form of a wound coil as shown in the drawings.

As shown in FIG. 6, a compartment plate 150 is interposed between the first and second casings 110a and 110b to separate the spaces of the first and second casings 110a and 110b from each other. The compartment plate 150 is assembled to closely make contact with the inner side of the second casing 110b.

A plurality of communication holes 151 are provided in the surface of the compartment plate 150 while being spaced apart from each other so that the heated water of the second casing 110b is introduced into the elastic bag 130a. In addition, a water room forming 153 is provided in the shape of a trench recessed at a predetermined depth in the surface of the compartment plate 150 in the direction of the second casing 110b. Since the water room forming 153 is recessed at a predetermined depth, the water room forming 153 suppresses or blocks the flow of the heated water flowing in the second casing 110.

In addition, as shown in FIG. 5, a plurality of casing water room formings 115, which are recessed inwardly, are formed in the plate surface of the second casing 110b. The casing water room formings 115 suppress the flow of the heated water flowing in the second casing 110b.

In addition, a plurality of water guides 170 is provided in a direction perpendicular to the winding direction of the heat exchanger 140a. The water guides 170 are provided in the second casing 110b while being spaced apart from each other by a predetermined distance to block the flow of the heated water flowing through the second casing 110b.

The water guides 170, the water room forming 153, and the casing water room formings 115 suppress the flow of the heated water, so that the swirl is formed at the side of the heat exchanger 140a of the second casing 110b. The swirl accelerates the heat exchange efficiency between the heat exchanger 140a and the heated water.

On the contrary, if the water guides 170, the water room forming 153, and the casing water room formings 115 are not provided, heat is stagnant on the surface of the heat exchanger 140a and the nitrogen-filled tank 120a, so that the heat exchange may not smoothly occur.

Accordingly, in the boiler 100a employing the nitrogen expansion tank for the boiler according to another embodiment of the present invention, the heat, which is stagnant due to the swirl generated by the geometric structure of the water guide 170, the water room forming 153, and the casing water room formings 115, can be used as energy.

The assembling structure of the boiler 110a employing the nitrogen expansion tank for the boiler according to another embodiment of the present invention will be schematically described with reference to FIG. 6.

First, the heat exchanger 140a is provided in the form of a coil inside the second casing 110b, and the water guides 170 are provided at the center of the heat exchanger 140b.

The compartment plate 150 is assembled on the front surface of the second casing 110b. The compartment plate 150 is press-fitted into the inner lateral side of the second casing 110b, and the coupling region therebetween is caulked. Theelastic bag 130a is provided outside the compartment plate 150, and the first casing 110a is provided outside the elastic bag 130a. The first casing 110a is press-fitted into the second casing 110b, so that the position of the first casing 110a is fixed.

In the assembled boiler, the nitrogen-filled tank and the heat exchanger are integrally provided in the casing, so that the cooling water circulation structure and the whole structure of the boiler can be simplified. Accordingly, the manufacturing cost can be saved. The swirl is formed to enhance the heat exchange efficiency.

### [Industrial Applicability]

The embodiment of the nitrogen expansion tank for the boiler according to the present invention described above is provided for the illustrative purpose, and those skilled in the art can understand various modifications and equivalents.

Accordingly, it should be understood that the present invention should not be limited to these exemplary embodiments. Therefore, the essential technical protective scope of the present invention should be determined based on the technical spirit of accompanying claims.

In addition, it should be understood that the present invention includes the present inventive concept defined by the claims and all modifications, equivalents, and substitutes within the scope of the claims.

## Claims

1. A nitrogen expansion tank for a boiler provided integrally with the boiler to absorb shock caused by expansion in a volume of heated water, the nitrogen expansion tank comprising:
a nitrogen-filled tank provided in a casing having a heated-water inlet and a heated-water outlet and filled with nitrogen; and
an elastic bag positioned in the nitrogen-filled tank such that heated water inflows or outflows and having a volume elastically deformed according to the inflow and the outflow of the heated water to absorb the shock caused by the expansion in the volume of the heated water.

2. The nitrogen expansion tank of claim 1, wherein the elastic bag is provided therein with an inlet for the inflow and the outflow of the heated water, the inlet of the elastic bag is provided to be open in the casing of the nitrogen-filled tank, and the nitrogen-filled tank is provided therein with a nitrogen filling port to receive nitrogen, such that the elastic bag is expanded to absorb the shock if a pressure caused by the expansion in the volume of the heated water introduced into the elastic bag is greater than a pressure of the nitrogen injected into the nitrogen-filled tank.

3. The nitrogen expansion tank of claim 2, wherein the elastic bag has a shape of a jar such that a portion away from the inlet has a volume larger than a volume of a portion having the inlet.
